# EUROPEAN PATENT APPLICATION

(11) **EP 4 005 699 A1**
(43) Date of publication of application: **01.06.2022**
(21) Application number: 20845034.6
(22) Date of filing: 03.06.2020
(51) Int. Cl.: B22D 23/00, B33Y 10/00, B33Y 30/00, B33Y 50/02, B29C 64/153, B29C 64/393

(54) **ADDITIVE MANUFACTURING DEVICE**

(30) Priority: 24.07.2019 JP 2019136225
(71) Applicant: Ebara Corporation, Tokyo 144-8510 (JP)
(72) Inventor: SHINOZAKI, Hiroyuki, Tokyo 144-8510 (JP)
(74) Representative: Wimmer, Hubert
(86) International application number: PCT/JP2020/021955
(87) International publication number: WO 2021/014779

(57) **Abstract**

One of objects of the present application is to provide a technique for allowing an AM apparatus to reduce a risk of an abnormal stop of the AM apparatus.

According to one aspect, an AM apparatus configured to manufacture a fabricated object is provided. This AM apparatus includes a detector configured to detect a shape of an upper surface of the fabricated object in the middle of fabrication, a determination device configured to determine which applies to a state of the upper surface of the fabricated object, (1) an unmelted region, (2) an abnormally solidified region, or (3) a normally solidified region based on data acquired from the detector, and a repair device configured to repair the region determined to be the abnormally solidified region by the determination device.

## Description

### TECHNICAL FIELD

The present application relates to an AM apparatus. The present application claims priority under the Paris Convention to Japanese Patent Application No. 2019-136255 filed on July 24, 2019. The entire disclosure of Japanese Patent Application No. 2019-136255 including the specification, the claims, the drawings, and the abstract is incorporated herein by reference in its entirety.

### BACKGROUND ART

There are known techniques for directly fabricating a three-dimensional object based on three-dimensional data on a computer that expresses the three-dimensional object. Known examples thereof include the Additive Manufacturing (AM) technique. As one example, in the AM technique using metal powder, each layer of the three-dimensional object is fabricated by, toward the metal powder deposited all over a surface, irradiating a portion thereof to be fabricated with a laser beam or an electron beam serving as a heat source, and melting and solidifying or sintering the metal powder. In the AM technique, a desired three-dimensional object can be fabricated by repeating such a process.

### CITATION LIST

### PATENT LITERATURE

PTL 1: Japanese Patent Application Public Disclosure No. 2004-277881
PTL 2: International Publication No. 2014-165310

### SUMMARY OF INVENTION

### TECHNICAL PROBLEM

An AM apparatus using the metal powder as the material gradually forms each layer of the fabricated object by causing the beam to scan layer by layer. Therefore, as the size of the fabricated object increases, the time taken for the fabrication also increases. Then, one conceivable measure for reducing the fabrication time is to increase the irradiation energy and the scanning speed of the beam. However, increasing the irradiation energy of the beam is easily accompanied by an excessive increase in the temperature of the surface of the metal powder layer to thus facilitate the occurrence of fume and spatter. The occurrence of fume and spatter during the fabrication can cloud the window or the lens of the beam
irradiation system, thereby leading to a reduction in the energy with which the metal powder is irradiated and thus resulting in incomplete melting. Repeating the excessive increase and the insufficient increase in the temperature during the fabrication can cause the fabricated object to have a rough shape on the surface thereof and impede the operation of the supply mechanism that supplies the metal powder material, thereby even causing the AM apparatus to be abnormally stopped during the fabrication depending on the circumstances. If the AM apparatus is stopped during the fabrication, recovery work is supposed to be performed on the AM apparatus by interrupting the fabrication and opening the fabrication chamber that has been kept vacuumized, and therefore a long time is consumed. Further, the fabricated object constructed halfway is supposed to be discarded and be re-fabricated from the beginning after the recovery, and therefore the material is also wastefully consumed. As the size of the fabricated object increases, a loss due to such an abnormal stop of the AM apparatus increases. Under these circumstances, one of the objects of the present invention is to allow the AM apparatus to reduce the risk of the abnormal stop of the AM apparatus. Further, one of the objects of the present invention is to provide a technique that allows the fabrication to be retried from halfway through without opening the fabrication chamber even when the AM apparatus is stopped halfway through.

### SOLUTION TO PROBLEM

According to one aspect, an AM apparatus for manufacturing a fabricated object is provided. This AM apparatus includes a detector configured to detect a shape of an upper surface of the fabricated object in the middle of fabrication, a determination device configured to determine which applies to a state of the upper surface of the fabricated object, (1) an unmelted region, (2) an abnormally solidified region, or (3) a normally solidified region based on data acquired from the detector, and a repair device configured to repair the region determined to be the abnormally solidified region by the determination device.

### BRIEF DESCRIPTION OF DRAWINGS

Fig. 1 schematically illustrates an AM apparatus for manufacturing a fabricated object according to one embodiment.
Fig. 2 is a flowchart illustrating a procedure of a fabrication method according to one embodiment.
Fig. 3A schematically illustrates a state before material powder is irradiated with a beam after being supplied.
Fig. 3B schematically illustrates a state in which the material powder is normally melted and solidified after being irradiated with the beam from the state illustrated in Fig. 3A.
Fig. 3C schematically illustrates an example of a state in which the material powder is not normally melted and solidified after being irradiated with the beam from the state illustrated in Fig. 3A.
Fig. 3D schematically illustrates an example of the state in which the material powder is not normally melted and solidified after being irradiated with the beam from the state illustrated in Fig. 3A.
Fig. 3E schematically illustrates an example of the state in which the material powder 152 is not normally melted and solidified after being irradiated with the beam from the state illustrated in Fig. 3A.
Fig. 4 schematically illustrates how a recessed portion on the surface of a fabricated object M1 is repaired by DED according to one embodiment.
Fig. 5 schematically illustrates how a protrusion portion on the surface of the fabricated object M1 is repaired by laser ablation according to one embodiment.

### DESCRIPTION OF EMBODIMENTS

In the following description, embodiments of an AM apparatus for manufacturing a fabricated object according to the present invention will be described with reference to the attached drawings. Identical or similar components may be indicated by identical or similar reference numerals in the attached drawings, and redundant descriptions regarding the identical or similar components may be omitted in the description of each of the embodiments. Further, features described in each of the embodiments are also applicable to other embodiments in so far as they do not contradict each other.

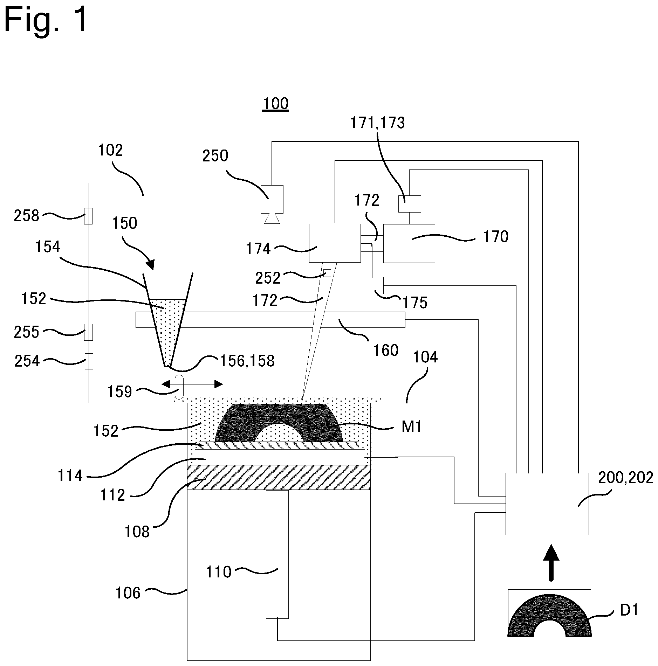

Fig. 1 schematically illustrates an AM apparatus for manufacturing a fabricated object according to one embodiment. As illustrated in Fig. 1, an AM apparatus 100 includes a fabrication chamber 102. A buildup chamber 106 is attached to a bottom surface 104 of the fabrication chamber 102. A lift table 108 is installed in the buildup chamber 106. The lift table 108 is movable in the vertical direction (a z direction) by a driving mechanism 110. The driving mechanism 110 may be, for example, a pneumatic or hydraulic driving mechanism or may be a driving mechanism including a motor and a ball screw. An inlet and an outlet for introducing and discharging protective gas into and out of the fabrication chamber 102 may be provided, although they are not illustrated.

In one embodiment, an XY stage 112 is disposed on the lift table 108 as illustrated in Fig. 1. The XY stage 112 is a stage movable in two directions (an x direction and a y direction) in parallel with the plane of the lift table 108. A base plate 114 for supporting a material of the fabricated object is disposed on the XY stage 112.

A material supply mechanism 150 for supplying the material of the fabricated object is disposed above the buildup chamber 106 in the fabrication chamber 102. The material supply mechanism 150 includes a storage container 154 for holding powder 152 used as the material of the fabricated object, such as metal powder, and a movement mechanism 160 for moving the storage container 154. The storage container 154 includes an opening 156 for discharging the material powder 152 onto the base plate 114. The opening 156 can be, for example, a linear opening 156 longer than one side of the base plate 114. In this case, the material powder 152 can be supplied to the entire surface of the base plate 114 by configuring the movement mechanism 160 so as to move in a range longer than the other side of the base plate 114 in a direction perpendicular to the line of the opening 156. Further, the storage container 154 includes a valve 158 for controlling the opening/closing of the opening 156. The material supply mechanism 150 may include a blade 159 for leveling out the material powder 152 supplied from the storage container 154.

Only one storage container 154 is disposed in Fig. 1, but a plurality of storage containers 154 may be disposed as one embodiment. In the case where the plurality of storage containers 154 is disposed, each of the storage containers 154 may be used to hold a different material or may be used to hold the material powder 152 that is the same material but has a different particle diameter.

In one embodiment, the AM apparatus 100 includes a laser light source 170, and a scanning mechanism 174, which guides a laser 172 emitted from the laser light source 170 toward the material powder 152 on the base plate 114, as illustrated in Fig. 1. Further, the AM apparatus 100 illustrated in Fig. 1 includes an adjustment device 171 for adjusting the intensity of the beam to be emitted. This adjustment device 171 can be configured to adjust the power of electricity to be supplied to the laser light source or the electron beam source. Further, the AM apparatus 100 illustrated in Fig. 1 includes a beam shaper 173 for adjusting the shape and the profile of the beam to be emitted. In the illustrated embodiment, the laser light source 170, the adjustment device 171, the beam shaper 173, and the scanning mechanism 174 are disposed in the fabrication chamber 102, but all or a part of them may be disposed outside the fabrication chamber 102. The scanning mechanism 174 can be formed by an arbitrary optical system, and is configured to be able to irradiate an arbitrary position of a fabrication plane (a focus plane) on the base plate 114 with the laser 172.

In one embodiment, the AM apparatus 100 includes a molten pool monitor 175 for monitoring a molten pool formed by the irradiation of the material powder 152 with the beam. The molten pool monitor 175 can include a non-contact type sensor, and may be realized by, for example, employing a method that irradiates the molten pool while superimposing a laser for the measurement on the optical axis of the laser for melting the metal with use of a monochromatic radiation thermometer that works with a measurement wavelength of approximately 650 nm, and receives reflected light on a detection element such as silicon. The molten pool monitor 175 may be configured to be able to measure the temperature, the shape of the liquid surface, the depth, and/or the like of the molten pool. The laser for the measurement uses a wavelength different from the wavelength of the laser for the melting. Temperature data measured by the molten pool monitor 175 is transmitted to a control device 200. Any molten pool monitor including a known molten pool monitor 175 can be used as the molten pool monitor 175.

In one embodiment, an electron beam source may be used instead of the laser light source 170. In the case where the electron beam source is used, the scanning mechanism 174 includes a magnet or the like, and is configured to be able to irradiate an arbitrary position of the fabrication plane on the base plate 114 with an electron beam.

In one embodiment, the AM apparatus 100 includes a detector 250 for detecting the shape of the fabricated object. In one embodiment, the detector 250 can be a 3D camera. The detector 250 can three-dimensionally measure the shape of the surface of the fabricated object M1 in the middle of the fabrication.

In one embodiment, the AM apparatus 100 includes a beam monitor 252 for detecting the energy of the emitted beam. The beam monitor 252 can be, for example, a light receiving element or a Faraday cup disposed in the route of the beam. Alternatively, the beam monitor 252 may be disposed at a position that a reflected beam or a beam transmitted from the route of the beam reaches.

In one embodiment, the AM apparatus 100 includes a thermometer 254 for detecting the temperature of the wall surface of the fabrication chamber 102.

In one embodiment, the AM apparatus 100 includes a concentration meter 255 that measures the concentration of oxygen in the fabrication chamber 102.

In one embodiment, the AM apparatus 100 includes a driving torque monitor (not illustrated) for detecting the driving torque of a movement mechanism of the blade 159 for leveling out the material powder 152 supplied from the storage container 154.

In one embodiment, the AM apparatus 100 includes a vibration meter 258 for detecting a vibration. The vibration meter 258 can be disposed at, for example, the support rod or the wall surface of the fabrication chamber 102, an arbitrary location in the AM apparatus 100 such as the scanning mechanism 174, the floor on which the AM apparatus 100 is set up, or the base used to set up the AM apparatus, although the vibration meter 258 can be disposed at any location.

In the embodiment illustrated in Fig. 1, the AM apparatus 100 includes the control device 200. The control device 200 is configured to control the operations of various kinds of operation mechanisms of the AM apparatus 100, such as the above-described driving mechanism 110, movement mechanism 160, laser light source 170, adjustment device 171, beam shaper 173, scanning mechanism 174, and valve 158 of the opening 156. Further, the control device 200 is configured to receive measured values from various kinds of measurement devices, such as the detector 250, the beam monitor 252, the thermometer 254, the driving torque motor, and the vibration meter 258. The control device 200 can be formed by a general computer or a dedicated computer.

When a three-dimensional object is fabricated by the AM apparatus 100 according to the embodiment illustrated in Fig. 1, the procedure therefor is as outlined below. First, three-dimensional data D1 of a fabrication target is input to the control device 200. The control device 200 generates slice data for the fabrication based on the input three-dimensional data D1 of the fabricated object. Further, the control device 200 generates execution data including fabrication conditions and the recipe. The fabrication conditions and the recipe include, for example, beam conditions, beam scanning conditions, and layering conditions. The beam conditions include voltage conditions, a laser output, and the like of the laser light source 170 in the case where the laser is used, or include a beam voltage, a beam current, and the like in the case where the electron beam is used. The beam scanning conditions include a scanning pattern, a scanning route, a scanning speed, a scanning interval, and the like. Examples of the scanning pattern include a pattern when the beam scans in one direction, a pattern when the beam scans in reciprocating directions, a pattern when the beam scans zigzag, and a pattern when the beam moves transversely while drawing a small circle. The scanning route determines, for example, in what order the beam scans. The layering conditions include, for example, a material type, an average particle diameter of the powder material, a particle shape, a particle size distribution, a layering thickness (a thickness in which the material powder is deposited all over the surface at the time of the fabrication), and a fabrication thickness coefficient (a ratio between the layering thickness and the thickness of the actually manufactured fabricated object). A part of the above-described fabrication conditions and recipe may be generated and changed according to the input three-dimensional data of the fabricated object or may be determined in advance independently of the input three-dimensional data of the fabricated object.

The material powder 152 of the fabricated object, such as metal powder, is loaded into the storage container 154. The lift table 108 of the buildup chamber 106 is moved to an upper position, by which the surface of the base plate 114 is adjusted so as to be positioned on the focus plane of the laser 172. Next, the valve 158 of the opening 156 of the storage container 154 is opened and the storage container 154 is moved, and then the material powder 152 is evenly supplied onto the base plate 114. The material supply mechanism 150 is controlled by the control device 200 so as to supply the material powder 152 onto the focus plane by an amount corresponding to one layer of the fabricated object (corresponding to the above-described "layering thickness"). Next, a fabricated object M1 corresponding to one layer is created by emitting the laser 172 from the laser light source 170, irradiating a predetermined range of the focus plane with the laser 172 by the scanning mechanism 174, and melting and sintering the material powder at a predetermined position. At this time, the irradiation position of the laser 172 may be changed by also moving the XY stage 112 disposed on the lift table 108 if necessary.

After the fabrication corresponding to one layer is ended, the lift table 108 of the buildup chamber 106 is lowered by a distance corresponding to one layer. The material powder 152 is supplied onto the focus plane by the material supply mechanism 150 by an amount corresponding to one layer of the fabricated object again. Then, the fabricated object M1 corresponding to one layer is created by causing the laser 172 to scan on the focus plane by the scanning mechanism 174 and melting and sintering the material powder 152 at a predetermined position. The targeted fabricated object M1 can be entirely created from the powder 152 by repeating these operations.

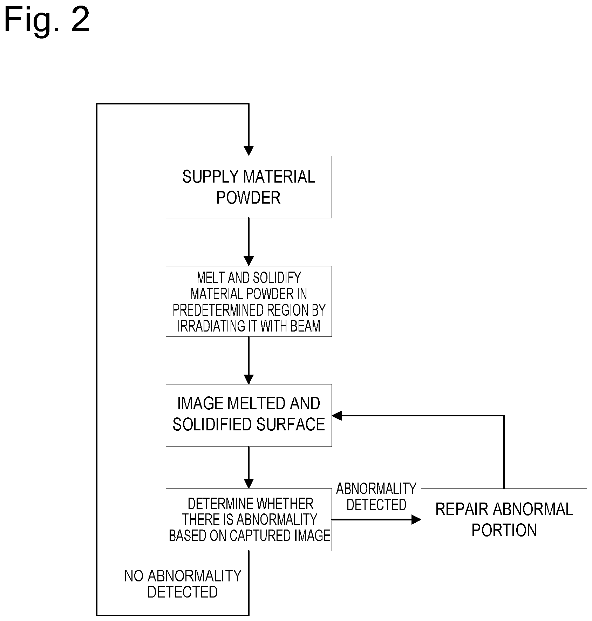

As described above, an excessive increase in the temperature or an insufficient increase in the temperature during the fabrication, if any, makes appropriate fabrication difficult. Therefore, in one embodiment, the AM apparatus 100 observes the shape of the surface of the fabricated object in the middle of the fabrication, and detects an abnormality in the fabrication. Fig. 2 is a flowchart illustrating a procedure of a fabrication method according to one embodiment. In the one embodiment, after the material powder is supplied to a predetermined position of the AM apparatus 100 and is irradiated with the beam to be melted and solidified in a predetermined region, the melted and solidified surface is imaged by the detector 250. As described above, the detector 250 is the 3D camera capable of three-dimensionally measuring the shape of the surface of the fabricated object M1 in the middle of the fabrication. Therefore, whether the material powder can be appropriately melted and solidified can be determined by observing the shape of the surface of the fabricated object M1 in the middle of the fabrication with use of the detector 250.

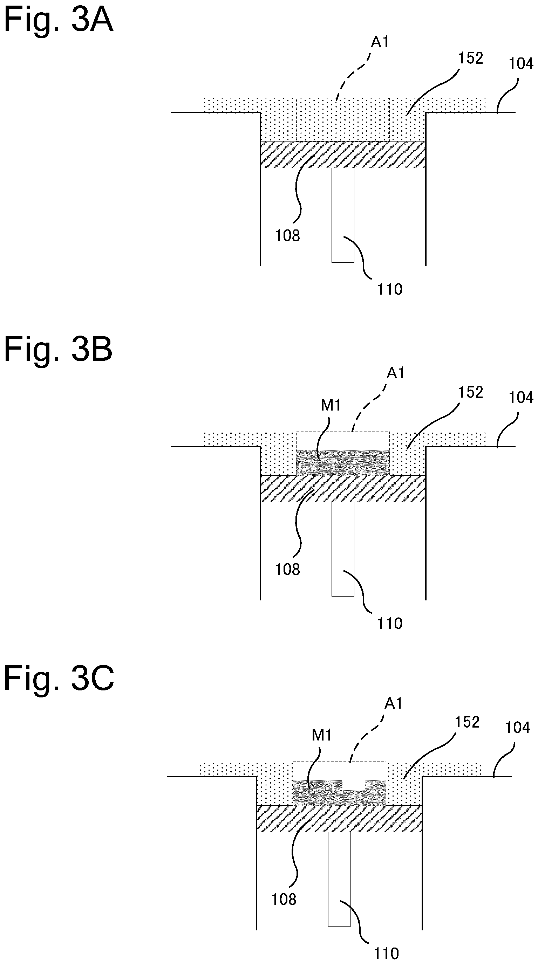

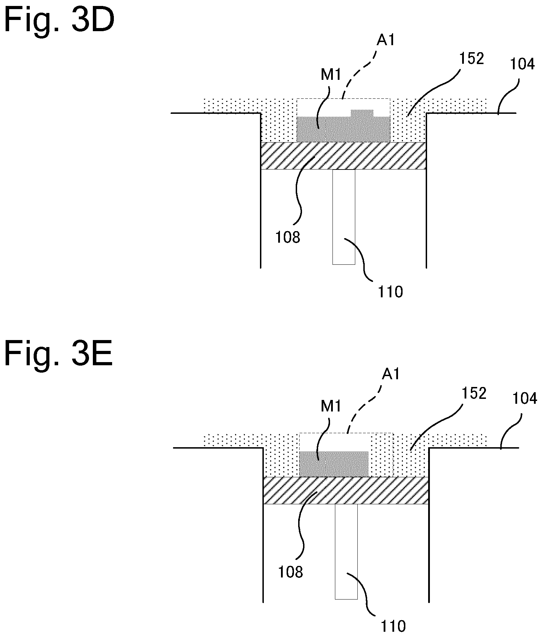

Figs. 3 each schematically illustrate a cross-sectional shape of the fabricated object in the middle of the fabrication. Fig. 3A illustrates a state before the material powder 152 is irradiated with the beam after being supplied. A region surrounded by a broken line in Fig. 3A indicates a selected region A1 to be irradiated with the beam.

Fig. 3B schematically illustrates a state in which the material powder 152 is normally melted and solidified after being irradiated with the beam from the state illustrated in Fig. 3A. Due to the melting and the solidification of the material powder 152, the height of the selected region A1 is lowered compared to the other regions, and the surface is located at a predetermined height if the material powder 152 is normally melted and solidified. Since the detector 250 can three-dimensionally measure the shape of the surface of the fabricated object M1 as described above, whether the material powder 152 is normally melted and solidified in the selected region A1 can be determined by detecting the height and the evenness of the surface of the fabricated object M1.

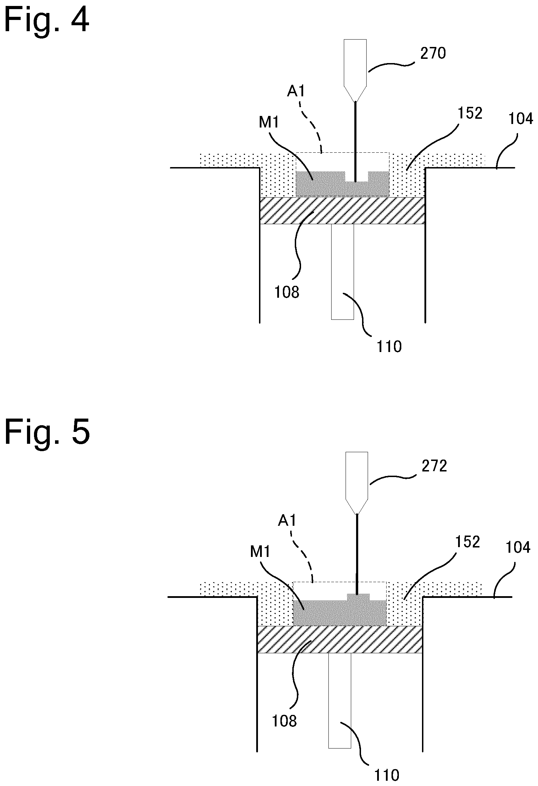

Fig. 3C schematically illustrates an example of a state in which the material powder 152 is not normally melted and solidified after being irradiated with the beam from the state illustrated in Fig. 3A. In the example illustrated in Fig. 3C, a recessed portion is generated on a part of the upper surface of the fabricated object M1. If an abnormality has occurred in the fabricated object, the abnormal portion is repaired as indicated by the flowchart illustrated in Fig. 2. When a recessed portion is generated on the surface of the fabricated object M1 as illustrated in Fig. 3C, the abnormal portion can be repaired by, for example, filling the recessed portion by directed energy deposition (DED). Fig. 4 schematically illustrates how the recessed portion on the surface of the fabricated object M1 is repaired by the DED according to one embodiment. As illustrated in Fig. 4, the AM apparatus 100 according to the one embodiment includes a DED nozzle 270, and can repair the recessed portion on the surface of the fabricated object M1 within the fabrication chamber 102 with use of the DED nozzle 270. The DED nozzle 270 can be configured to, for example, allow the material powder and a laser to be supplied from the nozzle to a predetermined position, and the material to be directly supplied, melted, and solidified at the predetermined position. Any DED nozzle, such as a known DED nozzle, can be used as the DED nozzle 270.

Fig. 3D schematically illustrates an example of the state in which the material powder 152 is not normally melted and solidified after being irradiated with the beam from the state illustrated in Fig. 3A. In the example illustrated in Fig. 3D, a protrusion portion is generated on a part of the upper surface of the fabricated object M1. If an abnormality has occurred in the fabricated object, the abnormal portion is repaired as indicated by the flowchart illustrated in Fig. 2. When a protrusion portion is generated on the surface of the fabricated object M1 as illustrated in Fig. 3D, the abnormal portion can be repaired by, for example, removing the protrusion portion by laser ablation. Fig. 5 schematically illustrates how the protrusion portion on the surface of the fabricated object M1 is repaired by the laser ablation according to one embodiment. As illustrated in Fig. 5, the AM apparatus 100 according to the one embodiment includes an ablation nozzle 272, and can remove the protrusion portion on the surface of the fabricated object M1 within the fabrication chamber 102 with use of a laser emitted from the ablation nozzle 272. The ablation nozzle 272 can be configured to, for example, allow a pulse laser to be supplied from the nozzle to a predetermined position, and the solid at the predetermined position to be melted and evaporated, thereby removing it. Any ablation nozzle, such as a known ablation nozzle, can be used as the ablation nozzle 272.

Fig. 3E schematically illustrates an example of the state in which the material powder 152 is not normally melted and solidified after being irradiated with the beam from the state illustrated in Fig. 3A. In the example illustrated in Fig. 3E, the material powder 152 partially fails to be melted and solidified in the selected region A1, and remains as the material powder 152. If an abnormality has occurred in the fabricated object, the abnormal portion is repaired as indicated by the flowchart illustrated in Fig. 2. When an unmelted region is present in the selected region A1 as illustrated in Fig. 3E, the abnormal portion can be repaired by, for example, melting and solidifying the unmelted region with use of the beam from the laser light source 170.

In this manner, which applies to the surface of the fabricated object M1 in the middle of the fabrication, the unmelted region, the abnormally solidified region, or the normally solidified region can be determined by using the detector 250. Basically, this determination can be made based on the height of the imaged fabricated object M1. The surface of the fabricated object M1 is determined to be the normally solidified region if the height of the fabricated object M1 matches an even height expected when the material powder 152 is normally melted and solidified, or is determined to include the abnormally solidified region if the height of the fabricated object M1 is partially raised or lowered. Alternatively, the surface of the fabricated object M1 can be determined to be the unmelted region if the selected region A1 after the irradiation with the beam includes a region having the same height as a non-selected region. The AM apparatus 100 can be configured in such a manner that the control device 200 makes the determination about which applies to the surface of the fabricated object M1, the unmelted region, the abnormally solidified region, or the normally solidified region. Further, since the positions of the unmelted region and the abnormally solidified region can be located with use of the detector 250, the unmelted region and the abnormally solidified region can be appropriately repaired by causing the DED nozzle 270, the ablation nozzle 272, the scanning mechanism 174, or the like to scan by the control device 200.

As illustrated in Fig. 2, after the repair of the abnormal portion is ended, an abnormality in the fabrication is detected by observing the shape of the fabricated object surface of the fabricated object M1 with use of the detector 250 again. If there is an abnormal portion, the abnormal portion is repaired as described above. If there is no abnormal portion, the fabrication proceeds to a procedure for forming a next layer.

Since the detector 250 can three-dimensionally measure the shape of the surface of the fabricated object M1 as described above, whether the material powder 152 is normally melted and solidified in the selected region A1 can be determined by detecting the height and the evenness of the surface of the fabricated object M1. Further, even when there is an abnormal portion in the fabricated object, the abnormal portion can be repaired within the fabrication chamber 102 as described above. Therefore, even when an abnormality has occurred during the fabrication, the abnormal portion can be repaired without opening the fabrication chamber 102. Since the abnormal portion during the fabrication can be repaired within the fabrication chamber, the present configuration can reduce the risk that the AM apparatus is abnormally stopped due to a malfunction of the mechanism for supplying the powder material according to an abnormality in the fabrication. Further, even if the AM apparatus is abnormally stopped due to the malfunction of the mechanism for supplying the material powder due to the abnormality in the fabrication, the present configuration allows the recovery work to be performed without opening the fabrication chamber 102 by repairing the abnormal portion within the fabrication chamber, thereby being able to reduce the risk that the time and the material are wastefully consumed.

The AM apparatus 100 according to the above-described embodiment includes the various kinds of sensors, such as the molten pool monitor 175, the beam monitor 252, the thermometer 254, the concentration meter 255, the driving torque monitor, and the vibration meter 258. Therefore, the AM apparatus 100 can detect the state of the AM apparatus 100 when an abnormality has occurred in the fabricated object, and, further, record the state of the AM apparatus 100 when the abnormality has occurred in the fabricated object. Analyzing the data acquired from the various kinds of sensors when the abnormality has occurred in the fabricated object is useful to identify the cause for the occurrence of the abnormality. Further, the acquired data may be utilized to, for example, set a threshold value for determining an error to the various kinds of sensors based on the state of the AM apparatus when the abnormality has occurred in the fabricated object, and stop the operation of the AM apparatus before an abnormality has actually occurred in the fabricated object and conduct maintenance of the AM apparatus 100 or replace a component of the AM apparatus 100.

Having described the embodiments of the present invention based on the several examples, the above-described embodiments of the invention are intended to facilitate the understanding of the present invention, and are not intended to limit the present invention thereto. It is apparent that the present invention can be modified or improved without departing from the spirit thereof, and includes equivalents thereof. Further, each of the components described in the claims and the specification can be arbitrarily combined or omitted within a range that allows it to remain capable of achieving at least a part of the above-described objects or bringing about at least a part of the above-described advantageous effects.

At least the following technical ideas can be recognized from the above-described embodiments.

[Configuration 1] According to a configuration 1, an AM apparatus for manufacturing a fabricated object is provided. This AM apparatus includes a detector configured to detect a shape of an upper surface of the fabricated object in the middle of fabrication, a determination device configured to determine which applies to a state of the upper surface of the fabricated object, (1) an unmelted region, (2) an abnormally solidified region, or (3) a normally solidified region based on data acquired from the detector, and a repair device configured to repair the region determined to be the abnormally solidified region by the determination device.

[Configuration 2] According to a configuration 2, in the AM apparatus according to the configuration 1, the detector is a 3D camera.

[Configuration 3] According to a configuration 3, in the AM apparatus according to the configuration 2, the determination device is configured to make the determination based on a height of the upper surface of the fabricated object.

[Configuration 4] According to a configuration 4, in the AM apparatus according to any one of the configurations 1 to 3, the repair device includes a laser ablation nozzle and/or a directed energy deposition nozzle.

[Configuration 5] According to a configuration 5, a method for manufacturing a fabricated object by an AM technique is provided. This method includes the steps of detecting an abnormality in an AM apparatus and interrupting fabrication processing, observing a state of an upper surface of the fabricated object fabricated until the fabrication processing is interrupted, comparing observed data and data for fabrication according to the AM technique and determining which applies to the upper surface of the fabricated object, (1) an unmelted region, (2) an abnormally solidified region, or (3) a normally solidified region, repairing the abnormally solidified region in a case where the upper surface of the fabricated object is determined to include the abnormally solidified region, observing the state of the upper surface of the repaired fabricated object, and restarting the fabrication processing in a case where the upper surface of the repaired fabricated object does not include the unmelted region and the abnormally solidified region.

### REFERENCE SIGNS LIST

- 102: fabrication chamber
- 106: buildup chamber
- 108: lift table
- 110: driving mechanism
- 112: stage
- 114: baseplate
- 150: material supply mechanism
- 152: material powder
- 154: storage container
- 159: movement mechanism
- 160: movement mechanism
- 170: laser light source
- 171: adjustment device
- 172: laser
- 173: beam shaper
- 174: scanning mechanism
- 200: control device
- 250: detector
- 252: beam monitor
- 254: thermometer
- 255: concentration meter
- 258: vibration meter
- 270: DED nozzle
- 272: abrasion nozzle
- D1: three-dimensional data
- M1: fabricated object

## Claims

1. An AM apparatus for manufacturing a fabricated object, the AM apparatus comprising:
a detector configured to detect a shape of an upper surface of the fabricated object in the middle of fabrication;
a determination device configured to determine which applies to a state of the upper surface of the fabricated object, (1) an unmelted region, (2) an abnormally solidified region, or (3) a normally solidified region based on data acquired from the detector; and
a repair device configured to repair the region determined to be the abnormally solidified region by the determination device.

2. The AM apparatus according to claim 1, wherein the detector is a 3D camera.

3. The AM apparatus according to claim 2, wherein the determination device is configured to make the determination based on a height of the upper surface of the fabricated object.

4. The AM apparatus according to any one of claims 1 to 3, wherein the repair device includes a laser ablation nozzle and/or a directed energy deposition nozzle.

5. A method for manufacturing a fabricated object by an AM technique, the method comprising the steps of:
detecting an abnormality in an AM apparatus and interrupting fabrication processing;
observing a state of an upper surface of the fabricated object fabricated until the fabrication processing is interrupted;
comparing observed data and data for fabrication according to the AM technique and determining which applies to the upper surface of the fabricated object, (1) an unmelted region, (2) an abnormally solidified region, or (3) a normally solidified region;
repairing the abnormally solidified region in a case where the upper surface of the fabricated object is determined to include the abnormally solidified region;
observing the state of the upper surface of the repaired fabricated object; and
restarting the fabrication processing in a case where the upper surface of the repaired fabricated object does not include the unmelted region and the abnormally solidified region.
